# FASCICULE DE BREVET EUROPEEN

(11) **EP 0 977 331 B1**
(45) Date de publication et mention de la délivrance du brevet: **25.04.2007**
(21) Numéro de dépôt: 99401915.6
(22) Date de dépôt: 27.07.1999
(51) Int. Cl.: H02B 1/30, F16B 12/46

(54) **Enveloppe en matière plastique rigide pour appareillages électriques**
Hartkunstststoffgehäuse für elektrische Geräte
Rigid, plastic enclosure for electrical devices

(30) Priorité: 27.07.1998 FR 9809598
(43) Date de publication de la demande: 02.02.2000
(73) Titulaire: Hispano Mecano Electrica S.A., 08786 Capellades (Barcelona) (ES)
(72) Inventeur: Dumon Dipuis, Michel, 08022 Barcelone (ES); Quesada, Manolo, 08028 Barcelone (ES)
(74) Mandataire: Carias, Alain

(56) Documents cités:
- EP-A- 0 263 018
- DE-A- 2 418 383
- DE-U- 29 605 374

## Description

La présente invention concerne une enveloppe en matière plastique rigide devant loger des appareillages électriques et comportant un panneau arrière vertical et des panneaux latéraux verticaux et orthogonaux au panneau arrière.

Actuellement, la fixation du panneau arrière aux panneaux latéraux est réalisée au moyen de vis et d'écrous. Cette assemblage demande par conséquent des moyens simples, mais nécessite cependant un usinage spécifique des panneaux latéraux pour adapter leur forme de manière à ce que leurs bords puissent s'encastrer et s'appuyer contre le panneau arrière.

Les documents DE-A-2418383 et DE-U-29605374 décrivent chacun une enveloppe conformément à l'art antérieur.

L'invention a par conséquent pour but de simplifier la fabrication d'une enveloppe en matière plastique rigide tout en visant un assemblage rapide et résistant de ses panneaux latéraux à son panneau arrière.

Selon l'invention,
- l'enveloppe comprend des panneaux arrière et latéraux moulés,
- le panneau arrière est assemblé aux panneaux latéraux par au moins une patte rigide de fixation dotée d'une extrémité emboîtable et d'une extrémité vissable destinées à être respectivement montées sur les panneaux latéraux et arrière,
- l'un des deux panneaux, notamment le panneau latéral, comporte un logement venu de moulage, et l'autre panneau, notamment le panneau arrière, comporte un bossage moulé pourvu d'un évidement pour coopérer avec une vis passant dans un trou de la patte rigide, l'extrémité emboîtable de la patte de fixation étant emboîtée et maintenue par coincement dans le logement du panneau latéral, tandis que l'extrémité vissable de la patte rigide est fixée au panneau arrière grâce à la vis, celle-ci étant de préférence autotaraudeuse.

De préférence, l'extrémité emboîtable de la patte rigide est parallèle au panneau arrière, et l'enveloppe comprend un panneau de fond et/ou de toit emboîté par des rebords sur les extrémités basse et/ou haute des panneaux latéraux.

La patte rigide peut avantageusement présenter entre ses extrémités une partie étagée adossée à des nervures du panneau arrière et du panneau latéral et être conformée à son extrémité vissable en étrier dont les ailes assurent le positionnement sur le bossage moulé du panneau arrière.

Un joint d'étanchéité périphérique peut avantageusement être logé derrière les pattes rigides dans une rainure du panneau arrière ou du panneau latéral. Ce joint est avantageusement identique à celui qui assure l'étanchéité de la porte de l'enveloppe.

L'invention concerne aussi une enveloppe en matière plastique comprenant les caractéristiques énoncées à la revendication 8.

D'autres caractéristiques apparaîtront à la lecture de la description qui va suivre en regard des dessins annexés, parmi lesquels :
- la figure 1 est une vue éclatée et de profil de l'armoire ;
- la figure 2 est une vue en coupe du panneau arrière assemblé à un panneau latéral ;
- la figure 3 est une vue en perspective de la patte de fixation réalisant l'assemblage des panneaux de la figure 2.

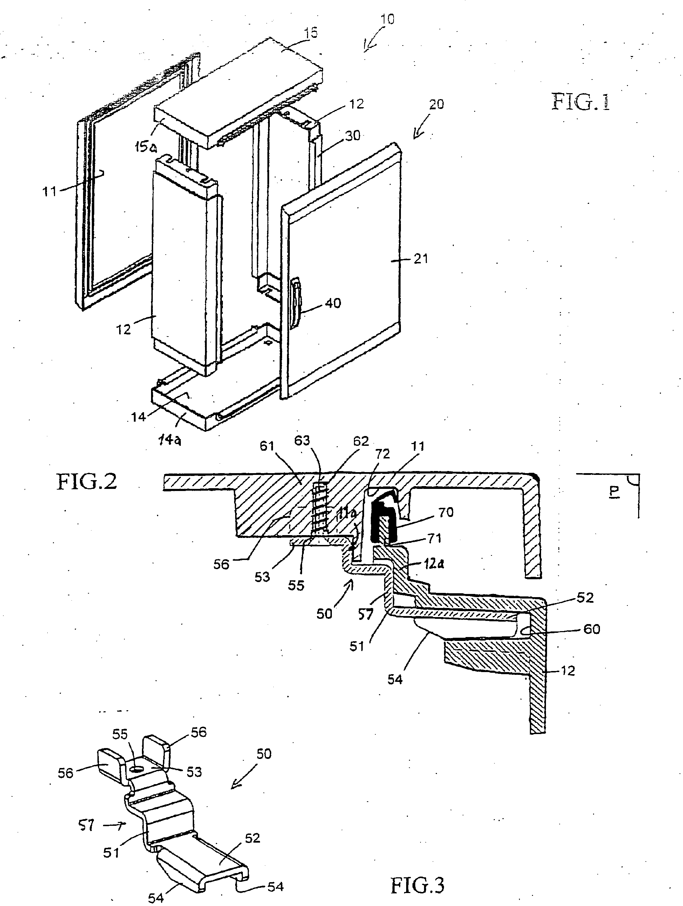

L'armoire 1 illustrée à la figure 1 est en matière plastique rigide et est destinée à loger des appareillages électriques. Le terme "armoire" vise les armoires proprement dites, les coffrets ou autres enveloppes analogues propres à recevoir des appareils électriques.

L'armoire 1 comprend une enveloppe 10 formée par l'assemblage d'un panneau vertical arrière 11, de panneaux verticaux latéraux 12 et de panneaux horizontaux de fond 14 et de toit 15, les panneaux 12,14 et 15 étant perpendiculaires au panneau arrière 11. L'enveloppe 10 présente en face avant une ouverture qui peut être fermée par une porte pivotante 20 avec adjonction d'un joint d'étanchéité périphérique sur un rebord de l'ouverture qui se compose d'une succession de rebords prévus à l'avant des différents panneaux.

La porte 20 est avantageusement constituée par un panneau 21 identique au panneau arrière 11 qui lui est opposé. Une charnière non visible est rapportée sur l'intérieur du panneau 21 pour la fixation de la porte et son pivotement sur un bord 30 d'un des panneaux latéraux 12. Une poignée 40 est assemblée sur l'extérieur du panneau 21 pour manoeuvrer la porte. Les panneaux 11-15 et 21 sont moulés en matière plastique, par exemple en polyester. La configuration identique du panneau arrière 11 et du panneau de porte 21 permet de les réaliser avec un seul moule de fabrication, de façon à réduire les coûts de production. Le même principe de fabrication à l'identique est appliqué aux panneaux latéraux 12 opposés, ainsi qu'aux panneaux opposés de fond 14 et de toit 15. Les panneaux de fond 14 et de toit 15 s'emboîtent sur les extrémités basse et respectivement haute des panneaux latéraux 12.

L'assemblage du panneau arrière 11 à un panneau latéral 12 est réalisé du côté intérieur de l'enveloppe au moyen d'au moins une patte rigide de fixation 50 (voir figures 2 et 3). Le panneau latéral 12 comprend un logement 60 venant de moulage, et le panneau arrière 11 comporte une partie de support 61 moulée, telle qu'un bossage, et pourvue d'un évidement 62, l'évidement 62 et le logement 60 étant situés dans un même plan horizontal P en position d'assemblage.

La patte rigide de fixation 50, telle qu'illustrée à la figure 3, comporte un corps métallique 51 qui présente une extrémité emboîtable 52 et une extrémité vissable 53 destinées à se fixer respectivement aux panneaux 12 et 11. L'extrémité emboîtable 52 est fixée au panneau 12 avant que l'extrémité vissable 53 soit fixée au panneau 11. Le corps 51 de la patte de fixation est avantageusement étagé dans sa partie 57 située entre les extrémités 52,53 pour s'adosser à des nervures 12a,11a des panneaux latéral 12 et arrière 11. Il en résulte une bonne rigidité et un bon appui de la pièce 50.

L'extrémité emboîtable 52 est destinée à être insérée par emboîtement dans le logement à dépouille convergente 60 du panneau latéral 12 et est dotée de pieds 54 pour fournir une meilleure assise. Le volume du logement 60 est adapté à l'épaisseur et à la hauteur de l'extrémité 52 de façon que celle-ci y soit retenue par simple coincement.

L'extrémité vissable 53 offre une face plane dotée d'un trou traversant 55 et deux ailes 56 sensiblement orthogonales à la face plane à la manière d'un étrier pour enjamber et se positionner sur le bossage 61 du panneau arrière, de façon à faire coïncider le trou 55 avec l'évidement 62. L'alignement du trou 55 avec l'évidement 62 permet d'introduire une vis 63, de préférence autotaraudeuse, pour fixer l'extrémité 53 de la patte 50 au panneau arrière.

L'assemblage d'un panneau latéral 12 au panneau arrière 11 de l'armoire se fait de la manière suivante.

L'extrémité 52 de la patte 50 est tout d'abord insérée et emmanchée dans le logement 60 du panneau latéral 12. Une fois cette extrémité 52 en place, le panneau latéral 12 est approché du panneau arrière 11 perpendiculairement à celui-ci, de façon à positionner l'évidement 62 en vis à vis du trou 55, l'extrémité 53 venant s'appliquer sur le bossage 61. L'extrémité 53 est alors fixée au panneau arrière 11 par le vissage de la vis autotaraudeuse 63 dans l'évidement 62. Il convient d'observer que l'emboîtement des rebords 14a,15a des panneaux de fond 14 et de toit 15 sur les extrémités basse et haute des panneaux latéraux contribue à la rigidité de l'assemblage, en confirmant l'emboîtement des extrémités 52 des pattes dans leurs logements 60.

L'étanchéité entre les deux panneaux est réalisée au moyen d'un joint périphérique 70 qui est situé derrière les pattes de fixation 50 et qui est mis en pression par l'application et le maintien des extrémités 53 des pattes contre les bossages 61. Le joint d'étanchéité est soit rendu solidaire d'une arête 71 du panneau latéral 12, pour pouvoir coopérer avec une rainure 72 du panneau arrière 11, comme illustré à la figure 2, soit logé dans une telle rainure 72 pour coopérer avec une face ou le bord d'une arête du panneau latéral 12. Le joint 70 est identique à celui qui assure l'étanchéité du panneau 21 de la porte.

## Revendications

1. Enveloppe en matière plastique rigide devant loger des appareillages électriques et comportant un panneau arrière vertical (11) et des panneaux latéraux (12) verticaux et orthogonaux au panneau arrière,
**caractérisée en ce que :**
- le panneau arrière (11) et les panneaux latéraux (12) sont moulés,
- le panneau arrière (11) est assemblé aux panneaux latéraux (12) par au moins une patte rigide de fixation (50) dotée d'une extrémité emboîtable (52) et d'une extrémité vissable (53) destinées à être montées sur les panneaux latéraux (12) et arrière (11),
- l'un des panneaux, notamment le panneau latéral (12), comporte un logement (60) venu de moulage, et l'autre panneau, notamment le panneau arrière (11), comporte une partie moulée (61) pourvue d'un évidement (62) pour coopérer avec une vis (63) passant dans un trou (55) de la patte rigide (50), l'extrémité emboîtable (52) de la patte de fixation étant emboîtée et maintenue par coincement dans le logement (60) du panneau latéral (12), tandis que l'extrémité vissable (53) de la patte rigide (50) est fixée au panneau arrière (11) grâce à la vis (63).

2. Enveloppe selon la revendication 1, **caractérisée en ce que** l'extrémité emboîtable (52) de la patte rigide (50) est parallèle au panneau arrière, et **en ce que** l'enveloppe comprend un panneau de fond (14) et/ou de toit (15) emboîté par des rebords (14a, 15a) sur les extrémités basse et/ou haute des panneaux latéraux (12).

3. Enveloppe selon la revendication 1, **caractérisée en ce que** la patte rigide (50) présente entre ses extrémités emboîtable (52) et vissable (53) une partie étagée (57) adossée à des nervures (11a, 12a) du panneau arrière (11) et du panneau latéral (12).

4. Enveloppe selon la revendication 1, **caractérisée en ce que** la vis de fixation (63) est autotaraudeuse.

5. Enveloppe selon la revendication 1, **caractérisée en ce que** l'extrémité vissable (53) de la patte (50) présente latéralement, à la manière d'un étrier, des ailes (66) de positionnement sur la partie moulée (61).

6. Enveloppe selon la revendication 1, **caractérisée en ce qu**'elle comprend un panneau de fond (14) et un panneau de toit (15), un joint d'étanchéité périphérique (70) étant logé derrière la patte rigide (50) dans une rainure (72) du panneau arrière (11) ou des panneaux latéraux (12) et des panneaux de fond (14) et de toit (15) pour assurer un assemblage étanche du panneau arrière.

7. Enveloppe selon la revendication 6, **caractérisée en ce qu**'elle présente une porte (20) constituée par un panneau (21) identique au panneau arrière (11) et dont l'étanchéité est assurée par un joint d'étanchéité périphérique identique au joint d'étanchéité (70) du panneau arrière.

8. Enveloppe en matière plastique rigide devant loger des appareillages électriques et constituée par assemblage de panneaux moulés, à savoir un panneau arrière vertical (11), des panneaux latéraux (12) verticaux et orthogonaux au panneau arrière, et des panneaux de fond et de toit (14,15) horizontaux et orthogonaux au panneau arrière,
**caractérisée en ce que :**
- le panneau arrière (11) est assemblé aux panneaux latéraux (12) par au moins une patte rigide de fixation (50) dotée d'une extrémité emboîtable (52) et d'une extrémité vissable (53) destinées à être respectivement montées sur les panneaux latéraux (12) et arrière (11),
- les panneaux de fond et de toit (14,15) sont identiques entre eux et sont emboîtés sur les panneaux latéraux (12) en confirmant l'emboîtement des pattes rigides de fixation (50).

## Claims

1. Casing of rigid plastics material for housing electrical equipment, having a vertical rear panel (11) and vertical side panels (12) which are orthogonal to the rear panel,
**characterized in that**:
- the rear panel (11) and the side panels (12) are moulded,
- the rear panel (11) is assembled to the side panels (12) by at least one rigid fixing lug (50) provided with an insertable end (52) and a screwable end (53) which are to be mounted on the side (12) and rear (11) panels,
- one of the panels, for example the side panel (12), has a housing (60) formed by the moulding process, and the other panel, for example the rear panel (11), has a moulded part (61) provided with a recess (62) for interaction with a screw (63) passing through a hole (55) of the rigid lug (50), the insertable end (52) of the fixing lug being inserted and retained by a friction fit in the housing (60) of the side panel (12), while the screwable end (53) of the rigid lug (50) is fixed to the rear panel (11) by means of the screw (63).

2. Casing according to Claim 1, **characterized in that** the insertable end (52) of the rigid lug (50) is parallel to the rear panel, and **in that** the casing comprises a base panel (14) and/or a top panel (15) fitted by means of flanges (14a, 15a) on to the lower and/or upper edges of the side panels (12).

3. Casing according to Claim 1, **characterized in that** the rigid part (50) has between its insertable end (52) and screwable end (53) a stepped part (57) bearing on ribs (11a, 12a) of the rear panel (11) and of the side panel (12).

4. Casing according to Claim 1, **characterized in that** the fixing screw (63) is self-tapping.

5. Casing according to Claim 1, **characterized in that** the screwable end (53) of the lug (50) has lateral flanges (56), like those of a stirrup, for positioning on the moulded part (61).

6. Casing according to Claim 1, **characterized in that** it comprises a base panel (14) and a top panel (15), a peripheral sealing gasket (70) being housed behind the rigid lug (50) in a groove (72) of the rear panel (11) or of the side panels (12) and of the base panel (14) and top panel (15) for the sealed assembly of the rear panel.

7. Casing according to Claim 6, **characterized in that** it has a door (20) composed of a panel (21) identical to the rear panel (11), sealed by a peripheral sealing gasket identical to the sealing gasket (70) of the rear panel.

8. Casing of rigid plastics material for housing electrical equipment, formed by the assembly of moulded panels, namely a vertical rear panel (11), vertical side panels (12) which are orthogonal to the rear panel, and base and top panels (14, 15) which are horizontal and orthogonal to the rear panel,
**characterized in that**:
- the rear panel (11) is assembled to the side panels (12) by at least one rigid fixing lug (50) provided with an insertable end (52) and a screwable end (53) which are to be mounted on the side (12) and rear (11) panels respectively,
- the base and top panels (14, 15) are identical to each other and are fitted on to the side panels (12) to reinforce the fitting of the rigid fixing lugs (50).

## Patentansprüche

1. Umhüllung aus steifem Plastikmaterial, die Elektrogeräte aufnehmen soll und eine senkrechte Rückwand (11) und senkrechte Seitenwände (12) orthogonal zur Rückwand aufweist,
**dadurch gekennzeichnet, dass**:
- die Rückwand (11) und die Seitenwände (12) geformt sind,
- die Rückwand (11) mit den Seitenwänden (12) durch mindestens eine steife Befestigungslasche (50) zusammengebaut wird, die mit einem einsteckbaren Ende (52) und einem schraubbaren Ende (53) versehen ist, die dazu bestimmt sind, auf die Seitenwände (12) und die Rückwand (11) montiert zu werden,
- eine der Wände, insbesondere die Seitenwand (12), einen geformten Sitz (60) aufweist, und die andere Wand, insbesondere die Rückwand (11), einen geformten Bereich (61) aufweist, der mit einer Aussparung (62) versehen ist, um mit einer Schraube (63) zusammenzuwirken, die durch ein Loch (55) der steifen Lasche (50) geht, wobei das einsteckbare Ende (52) der Befestigungslasche in den Sitz (60) der Seitenwand (12) eingesteckt und durch Klemmwirkung gehalten wird, während das schraubbare Ende (53) der steifen Lasche (50) an der Rückwand (11) mit Hilfe der Schraube (63) befestigt wird.

2. Umhüllung nach Anspruch 1, **dadurch gekennzeichnet, dass** das einsteckbare Ende (52) der steifen Lasche (50) parallel zur Rückwand ist, und dass die Umhüllung eine Bodenwand (14) und/oder eine Deckenwand (15) aufweist, die über Randleisten (14a, 15a) auf die unteren und/oder oberen Enden der Seitenwände (12) eingesteckt sind.

3. Umhüllung nach Anspruch 1, **dadurch gekennzeichnet, dass** die steife Lasche (50) zwischen ihrem einsteckbaren (52) und schraubbaren Ende (53) einen gestuften Bereich (57) aufweist, der an Rippen (11a, 12a) der Rückwand (11) und der Seitenwand (12) anlehnt.

4. Umhüllung nach Anspruch 1, **dadurch gekennzeichnet, dass** die Befestigungsschraube (63) selbstschneidend ist.

5. Umhüllung nach Anspruch 1, **dadurch gekennzeichnet, dass** das schraubbare Ende (53) der Lasche (50) seitlich nach Art eines Bügels Flügel (56) zur Positionierung auf dem geformten Bereich (61) aufweist.

6. Umhüllung nach Anspruch 1, **dadurch gekennzeichnet, dass** sie eine Bodenwand (14) und eine Deckenwand (15) aufweist, wobei eine Umfangsdichtung (70) hinter der steifen Lasche (50) in einer Rille (72) der Rückwand (11) oder der Seitenwände (12) und der Bodenwand (14) und Deckenwand (15) angeordnet ist, um einen dichten Einbau der Rückwand zu gewährleisten.

7. Umhüllung nach Anspruch 6, **dadurch gekennzeichnet, dass** sie eine Tür (20) aufweist, die aus einer Wand (21) gleich der Rückwand (11) besteht und deren Dichtheit von einer Umfangsdichtung gewährleistet wird, die gleich der Dichtung (70) der Rückwand ist.

8. Umhüllung aus steifem Plastikmaterial, die Elektrogeräte aufnehmen soll und durch Zusammenbau von geformten Wänden gebildet wird, nämlich einer senkrechten Rückwand (11), senkrechten Seitenwänden (12) orthogonal zur Rückwand und waagrechten Boden- und Deckenwänden (14, 15) orthogonal zur Rückwand,
**dadurch gekennzeichnet, dass**:
- die Rückwand (11) mit den Seitenwänden (12) durch mindestens eine steife Befestigungslasche (50) zusammengebaut wird, die mit einem einsteckbaren Ende (52) und mit einem schraubbaren Ende (53) versehen ist, die dazu bestimmt sind, an den Seitenwänden (12) bzw. der Rückwand (11) befestigt zu werden,
- die Boden- und Deckenwände (14, 15) einander gleich und auf die Seitenwände (12) eingesteckt werden, indem sie das Einstecken der steifen Befestigungslaschen (50) verstärken.
